# EUROPÄISCHE PATENTSCHRIFT

(11) **EP 4 032 135 B1**
(45) Veröffentlichungstag und Bekanntmachung des Hinweises auf die Patenterteilung: **26.07.2023**
(21) Anmeldenummer: 20771234.0
(22) Anmeldetag: 04.09.2020
(51) Int. Cl.: H01M 8/18

(54) **HYBRIDER KAVERNENSPEICHER**
HYBRID CAVERN STORAGE
ENTREPÔT DE CAVERNE HYBRIDE

(30) Priorität: 19.09.2019 DE 102019125240
(43) Veröffentlichungstag der Anmeldung: 27.07.2022
(73) Patentinhaber: RWE Gas Storage West GmbH, 45127 Essen (DE)
(72) Erfinder: NEUHAUS, Guido, 48249 Dülmen (DE); RITTINGHAUS, Kai, 44139 Dortmund (DE); SCHMIDT, Simon, 45359 Essen (DE)
(74) Vertreter: Cohausz & Florack
(86) Internationale Anmeldenummer: PCT/EP2020/074812
(87) Internationale Veröffentlichungsnummer: WO 2021/052782

(56) Entgegenhaltungen:
- WO-A1-2009/040521
- WO-A1-2014/026728
- DE-A1-102016 212 390
- US-A1- 2014 255 734

## Beschreibung

Der Gegenstand betrifft einen Batteriespeicher für eine Redox-Flow-Batterie mit zumindest einer Kavität sowie ein Verfahren zum Betreiben einer Redox-Flow-Batterie mit einem Batteriespeicher.

Eine Redox-Flow-Batterie, auch Flussbatterie genannt, ist ein elektrochemischer Energiespeicher. Der klassische Aufbau einer Redox-Flow-Batterie weist eine galvanische Zelle und zwei separate Elektrolytkreisläufe auf. Die galvanische Zelle ist durch eine Membran in zwei Halbzellen geteilt. Jede der Halbzellen wird von einem separaten Elektrolytkreislauf gespeist. Der jeweilige Elektrolyt ist in Tanks bevorratet und wird über Pumpen der jeweiligen Halbzelle zugeführt.

Eine erste Halbzelle wird von einem Anolyt und eine zweite Halbzelle von einem Katholyt durchströmt. An der Membran findet ein Ladungsaustausch zwischen den Elektrolyten statt. Beim Laden und Entladen werden Anolyt und Katholyt reduziert oder oxidiert, um elektrische Energie in chemische Energie umzuwandeln oder umgekehrt.

Aus der DE 10 2016 212 390 A1 ist bekannt, die Speicherkapazität für Anolyt und/oder Katholyt durch Verwendung einer stillgelegten Gaskaverne zu erhöhen.

Da die Anzahl der zur Verfügung stehenden Gaskavernen begrenzt ist, ist auch der Einsatz der Redox-Flow-Batterien unter Verwendung von stillgelegten Gaskavernen als Elektrolytspeicher stark begrenzt.

Dem Gegenstand lag daher die Aufgabe zugrunde, die Einsatzmöglichkeiten von Redox-Flow-Batterien zu erhöhen.

Diese Aufgabe wird dadurch gelöst, dass gegenständlich eine in Betrieb befindliche Gaskaverne für die Speicherung des Elektrolyten genutzt wird. Eine solche Kaverne kann als Kavernenspeicher bezeichnet werden. Gegenständlich wird vorgeschlagen, dass der Elektrolyt zumindest teilweise das in Gaskavernen üblicherweise notwendige Kissengas ersetzt. Es wird daher vorgeschlagen, dass im Bereich des Kavernendachs ein Nutzgas gespeichert ist und in Fluidverbindung mit einer obertägigen Gasinfrastruktur ist und der Elektrolyt am Kavernengrund gelagert ist. Der Elektrolyt ist in Fluidverbindung mit einer Batteriezelle des Batteriespeichers, insbesondere einer Halbzelle. Zumindest eine, bevorzugt beidem Halbzellen jeweils einer Batterie werden von jeweils einem Kavernenspeicher gespeist. Auch können eine Mehrzahl an Halbzellen in fluidtechnisch Reihe oder parallel geschaltet von einem gemeinsamen Kavernenspeicher gespeist werden.

Die Kaverne kann insbesondere eine Salzkaverne sein, andere Kavernen sind jedoch ebenfalls möglich. Für die Einspeicherung von Gas in solchen Kavernen ist in der Regel ein sogenanntes Kissengas vorzuhalten, welches ein nicht nutzbares Speichervolumen einnimmt und stets in der Kaverne verbleiben muss. Das Kissengas wird insbesondere dazu eingesetzt, die geomechanische Stabilität der Kaverne zu gewährleisten.

Gegenständlich wird nun vorgeschlagen, dieses Kissengas durch den Elektrolyt zu ersetzen. Das heißt, dass anstelle zumindest von Teilen des Kissengases das hierfür bereitgestellte Speichervolumen durch den Elektrolyt genutzt wird. Das in der Kaverne vorhandene Speichervolumen wird somit im Wesentlichen vollständig für die Energiespeicherung genutzt. Die vorhandenen Kissengasmengen können anderweitig wirtschaftlich genutzt werden.

Gasspeicherung in untertägigen Kavernen unterliegt gebirgsmechanischen Restriktionen wie z.B. Mindestdruck und Maximaldruck, Verweildauer von Gas unter bestimmten Druck etc.. Das die Kaverne umgebende Gebirge, beispielsweise Salz, ist ein elektroplastisches Medium, welches durch Druckänderungen Schädigungen erfahren kann. Um diese Schädigungen zu verhindern oder ein Ausheilen der Schädigung zu ermöglichen sind diese Restriktionen einzuhalten. Dazu sind in reinen Gaskavernen Zwangsfahrweisen etabliert, die festlegen, wie lange und bei welcher Gasmenge eingelagert und ausgelagert werden kann und welche Ruhezeiten zwischen Ein- und Auslagervorgängen einzuhalten sind. Durch die Einlagerung von Elektrolyt können diese Zwangsfahrweisen hinsichtlich der Mengen und Zeiten verändert werden, insbesondere kann die Menge und/oder die Geschwindigkeit von Ein- und Auslagervorgängen in Richtung eines erhöhten Mengenaustauschs verändert werden. Eine gegenständliche Hybrid-Kaverne kann somit eine höhere Umschlagmenge gegenüber herkömmlichen reinen Gaskavernen haben.

Eine obertägige Gasinfrastruktur kann insbesondere eine Anbindung an ein Gasverteilungsnetz, ein oberirdischer Zwischenspeicher, ein oder mehrere Pumpen, ein oder mehrere Ventile und dergleichen beinhalten. Über die obertägige Gasinfrastruktur wird Nutzgas, insbesondere Erdgas, in die Kaverne eingebracht und aus der Kaverne ausgebracht. Der gegenständliche Kavernenspeicher dient somit einerseits als Gasspeicher und andererseits als Elektrolytspeicher.

Wenn vorliegend von einer Kaverne gesprochen wird, so kann dies ein unterirdischer künstlich kontrolliert geschaffener Hohlraum, beispielsweise ein mehrere hundert Meter unter der Erdoberfläche gelagerter Hohlraum sein.

Ein Elektrolyt, der für den gegenständlichen Batteriespeicher zum Einsatz kommt, kann insbesondere ein Katholyt oder Anolyt für eine Redox-Flow-Batterie sein.

Der Elektrolyt kann beispielsweise eine Speicherkapazität und/oder eine Energiedichte von 25Wh/l aufweisen.

Eine gegenständliche Kaverne kann insbesondere eine Salzstockkaverne sein. Solche Salzstockkavernen sind an sich bekannt und können durch Ausspülen oder Aussohlen einer Salzschicht im Untergrund geschaffen werden. Die Kaverne kann jedoch auch abschnittsweise oder vollständig durch Gestein, insbesondere Granit begrenzt sein.

Wie eingangs bereits erläutert, wird vorgeschlagen, dass der Elektrolyt ein Kissengasvolumen des Nutzgases zumindest teilweise ersetzt.

Nutzgas kann dabei insbesondere Erdgas, beispielsweise L-Gas, H-Gas, Wasserstoff, oder dergleichen sein. Nutzgas ist insbesondere ein solches Gas, welches über ein räumlich verteiltes Gasverteilnetz verteilt werden kann. Dieses Nutzgas wird in der Kaverne im Bereich des Kavernendachs gespeichert.

Anstelle zumindest Teilen des Kissengasvolumens, welches für die gebirgsmechanische Stabilität bei herkömmlichen Kavernenspeichern in der Kaverne bleiben muss, wird der Elektrolyt am Kavernengrund eingelagert.

Um den Elektrolyt in die Kaverne einzuleiten, als auch den Elektrolyt aus der Kaverne zu entnehmen, wird vorgeschlagen, dass eine oder mehrere erste Rohrtouren zur Elektrolytentnahme und eine oder mehrere zweite Rohrtouren zur Elektrolytzufuhr in den Bereich des Kavernengrundes geteuft sind. Da anders als im Stand der Technik bekannt, nicht die gesamte Kaverne für den Elektrolyt genutzt wird, sondern die Kaverne eine hybride Speicherung von sowohl Nutzgas als auch Elektrolyt bereitstellt, muss der Elektrolyt in den Kavernengrund eingebracht werden. Aus diesem Grunde sind die beiden Rohrtouren bis in den Kavernengrund geteuft.

Gemäß einem Ausführungsbeispiel wird vorgeschlagen, dass das Volumen des Elektrolyts konstant ist und über die Redox-Flow-Batterie zirkuliert. In einem Kreislauf wird der Elektrolyt der Kaverne entnommen, über die Halbzelle der Redox-Flow-Batterie geführt und nachdem der Ladungsaustausch an der Membran der Batteriezelle stattgefunden hat, wieder in die Kaverne eingespeichert.

Besonders vorteilhaft ist der Einsatz von zwei voneinander strömungstechnisch getrennten Kavernen, wobei eine erste Kaverne den Anolyt und eine zweite Kaverne den Katholyt speichert. Jede dieser Kavernen kann gemäß der hier beschriebenen Ausführungsformen ausgerüstet werden.

Gemäß einem Ausführungsbeispiel wird vorgeschlagen, dass die Kaverne mit einem Füllgrad zwischen 15% und 95%, insbesondere zwischen 25% und 50% mit dem Elektrolyt gefüllt ist. Das verbleibende Restvolumen kann mit dem Nutzgas gefüllt werden, wobei das Nutzgas bevorzugt bis zu einem Mindestdruck, der in Abhängigkeit der Teufe dem 10 bis 100 fachen des atmosphärischen Umgebungsdruck entspricht, gelagert werden.

Wie bereits eingangs erwähnt, verlangen gebirgsmechanische Restriktionen, dass Mindestmenge, Mindestdrücke, Maximalmenge, Maximaldürcke und/oder bestimmte Zeiten einzuhalten sind. So ist vor einem Ausspeisen sicherzustellen, dass die Kaverne mit einer Mindestmenge an Nutzgas gefüllt ist und dieses vor dem Ausspeisen eine Mindestverweilzeit in der Kaverne erfüllt hat. Durch die gegenständliche Verwendung des Elektrolyts anstelle des Kissengases wird es ermöglicht, dass vor dem Ausspeisen der kleinste benötigte Füllstand, also die Mindestmenge des Nutzgases, in der Kaverne gegenüber einer reinen Gaskaverne reduziert ist. Das heißt, dass ein Ausspeisen bereits bei geringerer Mindestmenge und/oder kürzerer Verweildauer möglich ist. Dies erhöht die Flexibilität des Einsatzes der Gaskaverne erheblich, da diese schneller auf äußere Anforderungen reagieren kann.

Auch beim Befüllen ist es notwendig, dass zuvor ein benötigter Füllstand vorhanden war und das Befüllen über einen gewissen Zeitraum geschieht. Wird zu schnell befüllt, können Risse im Gebirge entstehen. Gegenüber bisherigen, reinen Gaskavernen, wird durch die gegenständliche Lösung ermöglicht, dass vor dem Befüllen mit Nutzgas ein mindestbenötigter Füllstand, das heißt eine Mindestmenge des Nutzgases und/oder ein Zeitraum zum Befüllen der Kaverne mit Nutzgas gegenüber einer reinen Gaskaverne reduziert ist.

Auch die gegenständliche Gaskaverne wird ein Restgas als Kissengas nach Ausspeiseende enthalten, jedoch mit einer geringeren Menge als bei reinen Gaskavernen. Nach dem Ausspeisen das Nutzgases kann beispielsweise ein Restdruck der in Abhängigkeit der Teufe zwischen 5bar und 50bar, bevorzugt zwischen 10bar und 40bar notwendig sein. Nach diesem Ausspeisen muss die Kaverne nach einer gewissen Zeit wieder befüllt werden, um das Einbrechen des Gebirges zu verhindern. Durch die gegenständliche Lösung ist die maximale Verweildauer einer entleerten Kaverne bis zu einem erneuten Befüllen der Kaverne mit Nutzgas gegenüber einer reinen Gaskaverne erhöht.

Die oberirdische Gasinfrastruktur verfügt in der Regel über leistungsstarke Anschlüsse an das elektrische Versorgungsnetz, beispielsweise Mittelspannungsanschlüsse oder Hochspannungsanschlüsse. Diese können genutzt werden, um die gegenständliche Redox-Flow-Batterie an ein elektrisches Versorgungsnetz anzuschließen. Gegenständlich wird vorgeschlagen, dass die Redox-Flow-Batterie unter Verwendung der vorhandenen Netzanschlüsse der Gasinfrastruktur an das elektrische Versorgungsnetz angeschlossen wird.

Mit Hilfe der gegenständlichen Lösung kann das Kissengas in Gasspeichern bis auf einen minimal erforderlichen Rest durch Elektrolyt ersetzt werden. Beispielsweise ist das Volumen des Kissengases in einer gegenständlichen Kaverne bis auf 10%, bevorzugt 5% des üblicherweise notwendigen Kissengases reduziert.

Mit Hilfe der obertägigen Redox-Flow-Batterie wird der Elektrolyt zum Ein- und Ausspeichern elektrischer Energie genutzt.

Gemäß einem Ausführungsbeispiel wird vorgeschlagen, dass der Elektrolyt eine mit einem chemischen Ladungsträger versetzter Flüssigkeit, z.B. Sole, insbesondere als Dispersion aufweist. Der chemische Ladungsträger ist insbesondere ein flüssiger oder löslicher Polymer. Dies führt zu einer erhöhten Umweltverträglichkeit gegenüber säurebasierten Elektrolyten.

Gemäß einem Ausführungsbeispiel wird vorgeschlagen, dass die Kavität ein Hohlraumvolumen im Bereich von 70.000m³ bis 800.000m³, insbesondere im Bereich zwischen 500.000m³ und 600.000m³ aufweist. Bei einer solchen Kaverne kann zwischen 10% und 25% des Volumens durch Elektrolyt befüllt werden, sodass die gegenständliche Kaverne einen Elektrolytspeicher mit einem Volumen zwischen 14.000m³ und 150.000m³ aufweist.

Ein weiterer Aspekt ist eine Redox-Flow-Batterie nach Anspruch 10. Diese weist zumindest einen Batteriespeicher nach einem der vorangehenden Ansprüche und zumindest eine Redox-Flow-Zelle, die mit dem Batteriespeicher in Fluidverbindung ist auf. Bevorzug sind zumindest zwei Batteriespeicher in der Form von Kavernen vorgesehen, die zur Versorgung einer oder mehrerer Redox-Flow-Zellen mit Elektrolyt dienen. Zumindest einer der Batteriespeicher ist als Kaverne gebildet.

Während der Elektrolyt wenigstens eines Kreislaufes einer solchen Redox-Flow-Batterie in einer Kaverne unterirdisch bevorratet wird, beispielsweise ein Katholyt oder ein Anolyt, kann der Elektrolyt eines zweiten Kreislaufes der Redox-Flow-Batterie beispielsweise ein Anolyt oder ein Katholyt, in konventioneller Weise oberirdisch in Tanks bevorratet werden.

Eine gegenständliche Redox-Flow-Zelle kann insbesondere eine galvanische Zelle sein, die durch eine oder mehrere Membranen in zumindest zwei Halbzellen geteilt ist. Jeweils eine der Halbzellen ist mit jeweils einem Speicher verbunden, in dem Anolyt oder Katholyt gespeichert ist. Eine erste Halbzelle wird von einem Anolyt und eine zweite Halbzelle wird von einem Katholyt durchströmt. An der Membran findet ein Ladungsaustausch zwischen den Elektrolyten statt. Abhängig davon, ob die Batterie geladen oder entladen wird, werden Anolyt und Katholyt reduziert oder oxidiert.

Die Redox-Flow-Zellen sind insbesondere obertägig angeordnet. Die Redox-Flow-Zellen können auch als Membranstacks bezeichnet werden.

Wie erwähnt, sind die Rohrtouren bis in den Kavernengrund geteuft. Es wird vorgeschlagen, dass eine erste Rohrtour und eine zweite Rohrtour zur Elektrolytzufuhr und zur Elektrolytentnahme ineinander verschachtelt sind. Dadurch ist es möglich, beide Rohrtouren mit nur einer Teufung in den Kavernengrund einzubringen.

Ein oder mehrere Redox-Flow-Zellen können elektrisch parallel und/oder in Reihe zueinander geschaltet sein und so sowohl an eine erforderliche elektrische Leistungsaufnahme und Leistungsabgabe angepasst werden als auch hinsichtlich ihrer elektrischen Speicherkapazität.

Eine Redox-Flow-Batterie kann insbesondere als Pufferspeicher für elektrische Energie aus Windkraftanlagen oder Solarkraftanlagen genutzt werden. Insbesondere ist die Redox-Flow-Batterie unmittelbar mit einem Wechselrichter einer Solarkraftanlage oder mit einem Umrichter einer Windkraftanlage gekoppelt. Dadurch kann unmittelbar an der Anlage eine Speicherung erfolgen, ohne dass eine Netzbelastung zu befürchten ist.

Ein weiterer Aspekt ist ein Verfahren zum Betreiben einer Redox-Flow-Batterie mit einem Batteriespeicher nach Anspruch 1 umfassend Einspeichern des Elektrolyts in die Kaverne, Zirkulieren des Elektrolyts zwischen der Kaverne und der Redox-Flow-Zelle, welche dadurch gekennzeichnet ist, dass zusätzlich zu dem Elektrolyt in der Kaverne ein Nutzgas ein- und ausgespeichert wird.

Nachfolgend wird der Gegenstand anhand einer Ausführungsbeispiele zeigenden Zeichnung näher erläutert. In der Zeichnung zeigen:
- Fig. 1: eine gegenständliche Redox-Flow-Batterie mit einem gegenständlichen Batteriespeicher;
- Fig. 2: die Anbindung einer gegenständlichen Batterie an eine Windkraftund/oder Fotovoltaik Anlage.

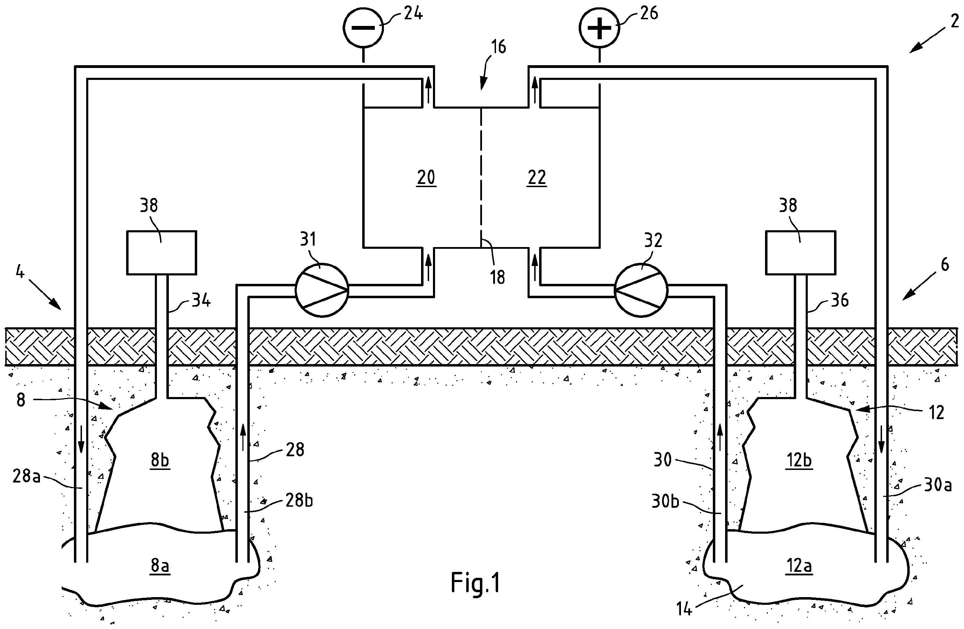

Fig. 1 zeigt eine Redox-Flow-Batterie 2. Die Redox-Flow-Batterie 2 hat einen ersten Batteriespeicher 4 und einen zweiten Batteriespeicher 6. Sowohl der erste Batteriespeicher 4 als auch der zweite Batteriespeicher 6 weist jeweils eine Kavität 8, 12 auf, die mit jeweils einem Elektrolyt 10, 14 gefüllt ist. Die Kavitäten 8,12 können Kavernen sein.

Der Elektrolyt 10 weist eine geeignete Flüssigkeit und einen in der Flüssigkeit gelösten chemischen Ladungsträger, z.B. Sole oder flüssiges Polymer, auf. Der Elektrolyt 14 weist ebenfalls eine geeignete Flüssigkeit und einen in der Flüssigkeit gelösten chemischen Ladungsträger, z.B. Sole oder flüssiges Polymer auf. Der Elektrolyt 10 bildet vorliegend den Katholyt. Der Elektrolyt 14 bildet den Anolyt.

Die Kaverne 8 weist ein Hohlraumvolumen von 600.000 m3 auf. Davon können 10% bis 20% zur Aufnahme des Elektrolyts 10 genutzt werden. Der Rest kann zur Aufnahme von Nutzgas genutzt werden.

Die Kaverne 12 weist ein Hohlraumvolumen von 600.000 m3 auf. Davon können 10% bis 20% zur Aufnahme des Elektrolyts 14 genutzt werden. Der Rest kann zur Aufnahme von Nutzgas genutzt werden.

Die Redox-Flow-Batterie 2 hat eine Redox-Flow-Zelle 16. Die Redox-Flow-Zelle 16 ist durch eine Membran 18 in eine erste Halbzelle 20 und eine zweite Halbzelle 22 unterteilt. Der ersten Halbzelle 20 ist eine erste Elektrode 24 zugeordnet. Der zweiten Halbzelle 22 ist eine zweite Elektrode 26 zugeordnet. Über die Elektroden 24, 26 kann der Redox-Flow-Zelle 16 elektrische Energie entnommen und zugeführt werden.

Die erste Halbzelle 20 ist über Rohrleitungen 28 mit dem ersten Batteriespeicher 4 verbunden. Die zweite Halbzelle 22 ist über Rohrleitungen 30 mit dem zweiten Batteriespeicher 6 verbunden. Der Elektrolyt 10 wird mithilfe einer Pumpe 31 durch die erste Halbzelle 20 gefördert. Der Elektrolyt 12 wird mithilfe einer Pumpe 32 durch die zweite Halbzelle 22 gefördert. Auf diese Weise werden zwei separate Elektrolytkreisläufe gebildet.

Die Redox-Flow-Batterie 2 kann eine Mehrzahl von Redox-Flow-Zellen 16 aufweisen, die in einer Kaskadenschaltung zueinander verschaltet sind. Die vorliegende Redox-Flow-Batterie 2 weist eine Kapazität von 15 Gigawattstunden (GWh) auf.

Im Gegensatz zum Stand der Technik sind die Rohrleitungen 28, 30 bis in den Kavernengrund 8a, 12a geteuft. Die Rohrleitung 28 ist durch einen Rücklauf 28a und einen Vorlauf 28b gebildet. Die Rohrleitung 30 ist durch einen Rücklauf 30a und einen Vorlauf 30b gebildet. Beide Rohrleitungen 28a, b/30a, b sind bis in den Kavernengrund 8a, 12a geteuft. Über die Pumpen 31, 32 wird eine Zirkulation des Elektrolyts zwischen dem Kavernengrund 8a, 12a und der Redox-Flow-Zelle 16 ermöglicht.

Zusätzlich zu der Redox-Flow-Batterie 2 sind Rohrleitungen 34, 36 in die Kaverne 8, 12 geteuft, wobei die Rohrleitungen 34, 36 im Kavernendach 8b, 12b münden. An die Rohrleitungen 34, 36 ist eine oberirdische Gasinfrastruktur 38 angeschlossen. Diese oberirdische Gasinfrastruktur 38 kann beispielsweise Pumpen, Ventile und Rohrleitungen umfassen und insbesondere einen Anschluss an ein Gasversorgungsnetz.

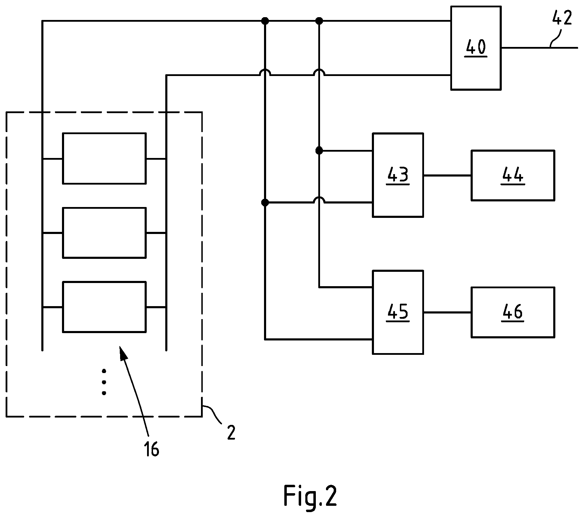

Fig. 2 zeigt eine Redox-Flow-Batterie 2 aus einer Mehrzahl von Redox-Flow-Zellen 16, die über einen Wechselrichter und/oder Transformator 40 mit einem elektrischen Energieversorgungsnetz 42 verbunden ist. Der Transformator 40 ist Teil einer bestehenden Gasinfrastruktur 38. Über einen DC-Umrichter 43 kann die Redox-Flow-Batterie 2 unmittelbar, das heißt vor dem Transformator 40 mit einer Fotovoltaik Anlage 44 gekoppelt sein.

Über einen AC-Umrichter 45 kann die Redox-Flow-Batterie 2 unmittelbar, das heißt vor dem Transformator 40 mit einer Windkraftanlage 46 gekoppelt sein.

### Bezugszeichenliste

- 2: Redox-Flow-Batterie
- 4: erster Batteriespeicher, (Katholyt-Kreislauf)
- 6: zweiter Batteriespeicher, (Anolyt-Kreislauf
- 8: Kavität
- 8a: Kavitätgrund
- 8b: Kavitätdach
- 10: Elektrolyt
- 12: Kavität
- 12a: Kavitätgrund
- 12b: Kavitätdach
- 14: Elektrolyt
- 16: Redox-Flow-Zelle
- 18: Membran
- 20: erste Halbzelle
- 22: zweite Halbzelle
- 24: erste Elektrode
- 26: zweite Elektrode
- 28a, b: Rohrleitungen
- 30a, b: Rohrleitungen
- 31,32: Pumpe
- 34, 36: Rohrleitungen
- 38: Gasinfrastruktur
- 40: Transformator
- 42: Energieversorgungsnetz
- 43: DC Umwandler
- 44: Fotovoltaik Anlage
- 45: AC Umwandler
- 46: Windkraftanlage

## Patentansprüche

1. Batteriespeicher für eine Redox-Flow-Batterie mit zumindest einer Kavität,
- wobei in der Kavität ein Elektrolyt bevorratet ist,
- wobei der Elektrolyt in Fluidverbindung mit zumindest einer Redox-Flow Zelle ist, und
- wobei die Kavität eine Kaverne ist,
**dadurch gekennzeichnet,**
- **dass** im Bereich des Kavernendachs ein Nutzgas gespeichert ist und in Fluidverbindung mit einer obertägigen Gasinfrastruktur ist und
- der Elektrolyt am Kavernengrund gelagert ist.

2. Batteriespeicher nach Anspruch 1,
**dadurch gekennzeichnet,**
- **dass** der Elektrolyt ein Kissengasvolumen des Nutzgases zumindest teilweise ersetzt.

3. Batteriespeicher nach Anspruch 1 oder 2,
**dadurch gekennzeichnet,**
- **dass** das Nutzgasvolumen und/oder der Nutzgasdruck variabel über die Gasinfrastruktur einstellbar ist.

4. Batteriespeicher nach einem der vorangehenden Ansprüche,
**dadurch gekennzeichnet,**
- **dass** eine erste Rohrtour zur Elektrolytentnahme und eine zweite Rohrtour zur Elektrolytzufuhr in den Bereich des Kavernengrundes geteuft sind.

5. Batteriespeicher nach einem der vorangehenden Ansprüche,
**dadurch gekennzeichnet,**
- **dass** das Volumen des Elektrolyts konstant ist und über die Redox-Flow-Batterie zirkuliert.

6. Batteriespeicher nach einem der vorangehenden Ansprüche,
**dadurch gekennzeichnet,**
- **dass** die Kaverne mit einem Füllgrad zwischen 15% und 95%, insbesondere zwischen 25% und 50% mit dem Elektrolyt gefüllt ist.

7. Batteriespeicher nach einem der vorangehenden Ansprüche,
**dadurch gekennzeichnet,**
- **dass** vor einem Ausspeisebeginn des Nutzgases aus der Kaverne ein Mindestvolumen des Nutzgases und/oder ein kleinste Verweildauer des Nutzgases in der Kaverne gegenüber einer reinen Gaskaverne reduziert ist.

8. Batteriespeicher nach einem der vorangehenden Ansprüche,
**dadurch gekennzeichnet,**
- **dass** vor einem Befüllen der Kaverne mit Nutzgas ein Mindestvolumen und/oder eine kleinster Ruhezeit des Nutzgases in der Kaverne gegenüber einer reinen Gaskaverne reduziert ist.

9. Batteriespeicher nach einem der vorangehenden Ansprüche,
**dadurch gekennzeichnet,**
- **dass** eine maximale Verweildauer einer maximal entleerten Kaverne bis zu einem erneuten Befüllen der Kaverne mit Nutzgas gegenüber einer reinen Gaskaverne erhöht ist.

10. Redox-Flow-Batterie mit
- zumindest einem Batteriespeicher nach einem der vorangehenden Ansprüchen, und,
- zumindest einer Redox-Flow Zelle, die mit dem Batteriespeicher in Fluidverbindung ist.

11. Verfahren zum Betreiben einer Redox-Flow-Batterie mit einem Batteriespeicher nach Anspruch 1 umfassend,
- Einspeichern des Elektrolyts in der Kaverne,
- Zirkulieren des Elektrolyts zwischen der Kaverne und der Redox-Flow Zelle,
**dadurch gekennzeichnet,**
- **dass** zusätzlich zu dem Elektrolyt in der Kaverne ein Nutzgas ein- und ausgespeichert wird.

## Claims

1. Battery storage for a redox flow battery with at least one cavity,
- wherein an electrolyte is stored in the cavity,
- wherein the electrolyte is in fluid communication with at least one redox flow cell, and
- wherein the cavity is a cavern,
**characterized in that**
- a utility gas is stored in the region of the cavern roof and is in fluid connection with an above-ground gas infrastructure, and
- the electrolyte is stored at the bottom of the cavern.

2. Battery storage according to claim 1,
**characterized in that**
- the electrolyte at least partially replaces a cushion gas volume of the utility gas.

3. Battery storage according to claim 1 or 2,
**characterized in that**
- the utility gas volume and/or the utility gas pressure can be variably adjusted via the gas infrastructure.

4. Battery storage according to any one of the preceding claims,
**characterized in that**
- a first pipe length for electrolyte removal and a second pipe length for electrolyte supply are driven into the region of the cavern bottom.

5. Battery storage according to any one of the preceding claims,
**characterized in that**
- the volume of electrolyte is constant and circulates over the redox flow battery.

6. Battery storage according to any of the preceding claims,
**characterized in that**
- the cavern is filled with the electrolyte to a degree of filling of between 15% and 95%, in particular between 25% and 50%.

7. Battery storage according to any one of the preceding claims,
**characterized in that**
- before the utility gas starts to be discharged from the cavern, a minimum volume of the utility gas and/or a minimum residence time of the utility gas in the cavern is reduced compared with a pure gas cavern.

8. Battery storage according to any one of the preceding claims,
**characterized in that**
- before the cavern is filled with utility gas, a minimum volume and/or a smallest rest time of the utility gas in the cavern is reduced compared with a pure gas cavern.

9. Battery storage according to any one of the preceding claims,
**characterized in that**
- a maximum residence time of a maximally emptied cavern until the cavern is refilled with utility gas is increased compared with a pure gas cavern.

10. Redox flow battery with
- at least one battery storage according to any one of the preceding claims, and,
- at least one redox flow cell in fluid communication with the battery storage.

11. Method of operating a redox flow battery having a battery storage according to claim 1 comprising,
- storing the electrolyte in the cavern,
- circulating the electrolyte between the cavern and the redox flow cell, **characterized in**
- in addition to the electrolyte in the cavern, a utility gas is stored in and out of the cavern.

## Revendications

1. Accumulateur de batterie pour une batterie à flux redox avec au moins une cavité,
- où un électrolyte est stocké dans la cavité,
- où l'électrolyte est en communication fluidique avec au moins une cellule à flux redox, et
- où la cavité est une caverne,
**caractérisé en ce**
- **qu'**un gaz utile est stocké dans la zone du toit de la caverne et est en communication fluidique avec une infrastructure de gaz en surface, et
- l'électrolyte est stocké au fond de la caverne.

2. Accumulateur de batterie selon la revendication 1,
**caractérisé en ce**
- **que** l'électrolyte remplace au moins partiellement un volume de gaz coussin du gaz utile.

3. Accumulateur de batterie selon la revendication 1 ou 2,
**caractérisé en ce**
- **que** le volume de gaz utile et/ou la pression de gaz utile sont réglables de manière variable par l'infrastructure de gaz.

4. Accumulateur de batterie selon l'une des revendications précédentes,
**caractérisé en ce**
- **qu'**un premier circuit de tubes pour le prélèvement de l'électrolyte et un deuxième circuit de tubes pour l'alimentation en électrolyte sont creusés dans la zone du fond de la caverne.

5. Accumulateur de batterie selon l'une des revendications précédentes,
**caractérisé en ce**
- **que** le volume d'électrolyte est constant et circule dans la batterie à flux redox.

6. Accumulateur selon l'une des revendications précédentes,
**caractérisé en ce**
- **que** la caverne est remplie de l'électrolyte à un taux de remplissage compris entre 15% et 95%, en particulier entre 25% et 50%.

7. Accumulateur de batterie selon l'une des revendications précédentes,
**caractérisé en ce**
- **qu'**avant un début de sortie du gaz utile de la caverne, un volume minimal du gaz utile et/ou un temps de repos minimal du gaz utile dans la caverne est réduit par rapport à une caverne de gaz pure.

8. Accumulateur à batterie selon l'une des revendications précédentes,
**caractérisé en ce**
- **qu'**avant un remplissage de la caverne avec du gaz utile, un volume minimal et/ou un temps de repos minimal du gaz utile dans la caverne est réduit par rapport à une caverne de gaz pur.

9. Accumulateur de batterie selon l'une des revendications précédentes,
**caractérisé en ce**
- **qu'**une durée de repos maximale d'une caverne vidée au maximum jusqu'à un nouveau remplissage de la caverne avec du gaz utile est augmentée par rapport à une caverne de gaz pur.

10. Batterie à flux redox avec
- au moins un accumulateur de batterie selon l'une des revendications précédentes, et,
- au moins une cellule à flux redox en communication fluidique avec l'accumulateur de batterie.

11. Procédé d'exploitation d'une batterie à flux redox avec un accumulateur selon la revendication 1, comprenant,
- stocker l'électrolyte dans la caverne,
- faire circuler l'électrolyte entre la caverne et la cellule à flux redox,
**caractérisé en ce**
- **qu'**en plus de l'électrolyte, un gaz utile est stocké et déstocké dans la caverne.
